(19) **Europäisches Patentamt**

**European Patent Office**

**Office européen des brevets**

(11) Veröffentlichungsnummer: **0 136 645**
**B1**

(12) **EUROPÄISCHE PATENTSCHRIFT**

(45) Veröffentlichungstag der Patentschrift:
**22.06.88**

(21) Anmeldenummer: **84111372.3**

(22) Anmeldetag: **24.09.84**

(51) Int. Cl.⁴: **H 05 G 1/70,** H 04 B 9/00

(54) **Röntgendiagnostikanlage mit einer Mehrzahl von Anlagenkomponenten.**

(30) Priorität: **05.10.83 DE 3336237**

(43) Veröffentlichungstag der Anmeldung:
**10.04.85 Patentblatt 85/15**

(45) Bekanntmachung des Hinweises auf die Patenterteilung:
**22.06.88 Patentblatt 88/25**

(84) Benannte Vertragsstaaten:
**DE FR**

(56) Entgegenhaltungen:
**DE - A - 2 724 841**
**DE - A - 2 850 683**
**DE - A - 3 036 217**
**FR - A - 2 429 539**
**US - A - 4 148 558**
**US - A - 4 166 946**
**US - A - 4 234 969**

(73) Patentinhaber: **Siemens Aktiengesellschaft Berlin und München, Wittelsbacherplatz 2, D-8000 München 2 (DE)**

(72) Erfinder: **Schmitmann, Herbert, Feldstrasse 10, D-8524 Uttenreuth (DE)**

## Beschreibung

Die Erfindung betrifft eine Röntgendiagnostikanlage mit einer Mehrzahl von Anlagenkomponenten sowie einer Leitung zur Informationsüber-tragung zwischen den einzelnen Anlagenkompo-nenten.

In der modernen Röntgentechnik wird häufig eine Vielzahl von Anlagenkomponenten, z. B. ver-schiedene Röntgengeräte und ein Röntgengene-rator, zusammengeschaltet. Für die Ansteuerung der einzelnen Anlagenkomponenten ist dabei die Übertragung entsprechender Informationen erforderlich. Hierzu kann eine feste Verdrahtung, d.h. es können festgeschaltete Signalwege, vorgesehen sein. Bei einer derartigen Zusammenschaltung ist jedoch eine Verdrahtungsänderung für eine Änderung der Konfiguration erforderlich. Zur Verbesserung können die Anlagenkompo-nenten über eine Schleifenleitung zusammenge-schaltet sein. Bei Verwendung eines Lichtwellenleiters zum Aufbau eines solchen Ringes ist jedoch sicherzustellen, dass beim Ausfall einer An-lagenkomponente die übrigen Anlagenkompo-nenten störungsfrei weiterarbeiten.

Der Erfindung liegt die Aufgabe zugrunde, eine Röntgendiagnostikanlage der eingangs genannten Art so auszubilden, dass eine besonders einfache Änderung der jeweiligen Konfiguration möglich ist und dabei bei Störungen in einer An-lagenkomponente die anderen Anlagenkompo-nenten nicht beeinflusst werden.

Diese Aufgabe ist erfindungsgemäss dadurch gelöst, dass jeder Anlagenkomponente je ein Schnittstellen-Steuerbaustein mit einem Datenein- und einem Datenausgang zugeordnet ist, dass alle Schnittstellen-Steuerbausteine durch Lichtwellenleiter über ihre Datenein- und Datenausgänge zu einem Ring zusammengeschaltet sind und dass ein optischer Umschalter für die Schnittstellen-Steuerbausteine vorhanden ist, durch den der Lichtfluss wahlweise über den jeweiligen Schnittstellen-Steuerbaustein oder einen parallel dazu liegenden, den Schnittstellen-Steuerbaustein überbrückenden Lichtwellenleiter führbar ist. Bei der erfindungsgemässen Röntgendiagnostikanlage erfolgt die Informationsübertragung über Lichtwellenleiter. Für den logischen Datentransport, die Datensicherung, die dezentrale Kommunikationssteuerung, die Konfigurationsverwaltung und die Netzüberwachung ist der Schnittstellen-Steuerbaustein als Benutzerschnittstelle vorgesehen. Innerhalb des durch die Anzahl der Anlagenkomponenten vorgegebenen Rahmens sind beliebige räumliche und logische Konfigurationen möglich. Bei Störungen in einer Anlagenkomponente wird der zugeordnete Schnittstellen-Steuerbaustein über den optischen Umschalter überbrückt, so dass der Informationsfluss unter Umgehung der defekten Anlagenkomponente weitergehen kann.

Die Erfindung ist nachfolgend anhand eines in der Zeichnung dargestellten Ausführungsbeispieles näher erläutert.

Es zeigen:

Fig. 1 eine Röntgendiagnostikanlage nach der Erfindung, und

Fig. 2 eine Einzelheit der Röntgendiagnostikanlage gemäss Figur 1.

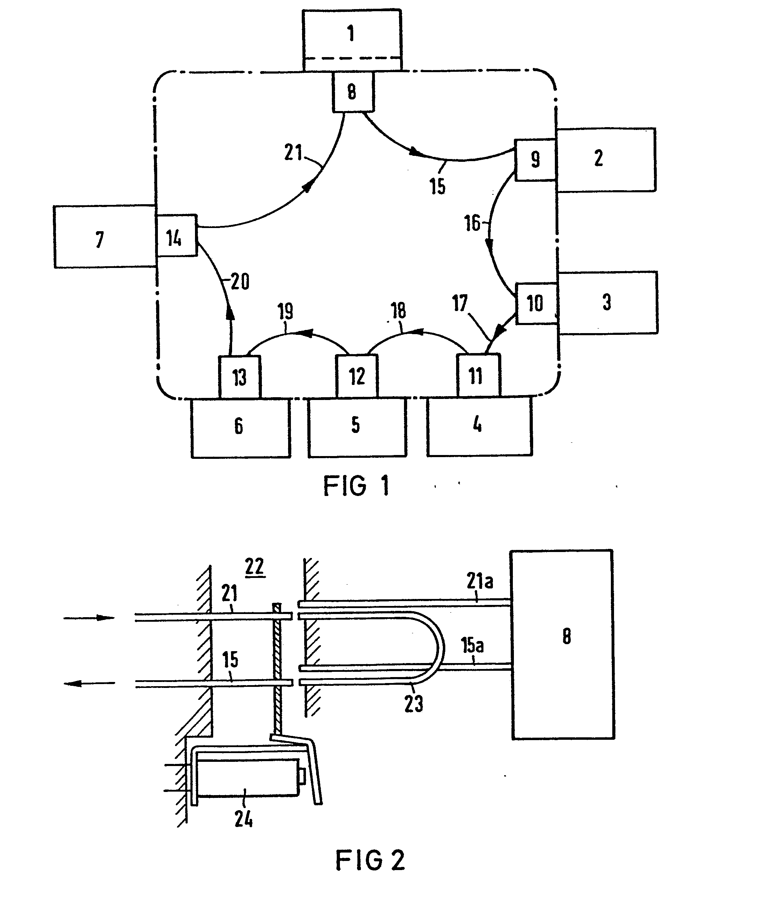

In der Figur 1 ist eine Röntgendiagnostikanlage mit einer Mehrzahl von Anlagenkomponenten 1 bis 7 dargestellt. Die Anlagenkomponente 1 kann beispielsweise ein Röntgengenerator und die Anlagenkomponenten 2 bis 7 können beispielsweise Röntgendiagnostikgeräte sein.

Jeder Anlagenkomponente 1 bis 7 ist je ein Schnittstellen-Steuerbaustein 8 bis 14 zugeordnet. Jeder Schnittstellen-Steuerbaustein hat je einen Datenein- und einen Datenausgang. Alle Schnittstellen-Steuerbausteine sind durch Lichtwellenleiter 15 bis 21 für die Informationsübertragung über ihre Datenein- und Datenausgänge zu einem Ring zusammengeschaltet. Dadurch erfolgen ein logischer Datentransport, die Datensi-cherung, eine dezentrale Kommunikationssteue-rung, die Konfigurationsverwaltung und die Netz-überwachung. Die Schnittstellen-Steuerbaustei-ne 8 bis 14 ergeben Benutzerschnittstellen. Durch Programmänderung ist dabei eine einfache Änderung der Konfiguration möglich.

Die Figur 2 zeigt beispielsweise den Schnittstellen-Steuerbaustein 8 sowie die Lichtwellenleiter 21 und 15, die in den Schnittstellen-Steuerbaustein 8 hinein- bzw. aus ihm herausführen. Aus der Figur 2 geht hervor, dass für den Schnittstellen-Steuerbaustein 8 ein optischer Umschalter 22 vorgesehen ist, durch den der Lichtfluss wahlweise vom Lichtwellenleiter 21 auf den Eingang 21a das Schnittstellen-Steuerbausteines 8 und vom Ausgang 15a zum Lichtwellenleiter 15, also über den Schnittstellen-Steuerbaustein 8 oder einen parallel dazu liegenden, den Schnitt-stellen-Steuerbaustein 8 überbrückenden Licht-wellenleiter 23 führbar ist. Die Umschaltung erfolgt durch Bewegung der Enden der Lichtwellenleiter 15 und 21 mit Hilfe eines Relais 24. In der gezeichneten Stellung ist der Schnittstellen-Steuerbaustein 8 überbrückt. Dies ist z.B. dann sinnvoll, wenn Störungen in der zugehörigen Anlagenkomponente 1, z.B. ein Stromausfall, vorliegen. In diesem Fall erfolgt keine Unterbrechung des Informationsflusses. Bei störungsfreiem Betrieb ist das Relais 24 erregt und der Lichtfluss geht vom Lichtwellenleiter 21 zum Eingang 21a und über den Schnittstellen-Steuerbaustein 8 zu dessen Ausgang 15a und von dort zum Lichtwellenleiter 15.

In gleicher Weise wie für den Schnittstellen-Steuerbaustein 8 können auch für die übrigen Schnittstellen-Steuerbausteine 9 bis 14 optische Umschalter vorgesehen sein.

## Patentansprüche

1. Röntgendiagnostikanlage mit einer Mehrzahl von Anlagenkomponenten (1 bis 7) sowie einer Leitung (15 bis 21) zur Informationsübertra-gung zwischen den einzelnen Anlagenkompo-

nenten (1 bis 7), dadurch gekennzeichnet, dass jeder Anlagenkomponente (1 bis 7) je ein Schnittstellen-Steuerbaustein (8 bis 14) mit einem Datenein- und einem Datenausgang (21a, 15a) zugeordnet ist, dass alle Schnittstellen-Steuerbausteine (8 bis 14) durch Lichtwellenleiter (15 bis 21) über ihre Datenein- und Datenausgänge (21a, 15a) zu einem Ring zusammengeschaltet sind und dass ein optischer Umschalter (22) für die Schnittstellen-Steuerbausteine (8 bis 14) vorhanden ist, durch den der Lichtfluss wahlweise über den jeweiligen Schnittstellen-Steuerbaustein (z.B. 8) oder einen parallel dazu liegenden, den Schnittstellen-Steuerbaustein (z.B. 8) überbrükkenden Lichtwellenleiter (23) führbar ist.

2. Röntgendiagnostikanlage nach Anspruch 1, dadurch gekennzeichnet, dass der optische Umschalter (22) in Abhängigkeit von Störungen der zugeordneten Anlagenkomponente (z.B. 1) steuerbar ist.

## Claims

1. Radio diagnostic installation having a plurality of installation components (1 to 7) and also a line (15 to 21) for the purpose of transferring information between the individual installation components (1 to 7), characterised in that to each installation component (1 to 7) there is allocated a respective interface control module (8 to 14) with a data input and a data output (21a, 15a, in that all the interface control modules (8 to 14) are connected together by means of optical waveguides (15 to 21) via their data inputs and data outputs (21a, 15a) to form a ring and in that an optical switch (22) is present for the interface control modules (8 to 14), by means of which switch the light flux can be guided selectively via the respective interface control module (e.g. 8) or an optical waveguide (23) lying parallel thereto and bypassing the interface control module (e.g. 8).

2. Radio diagnostic installation according to claim 1, characterised in that the optical switch (22) is controllable as a function of disturbances of its allocated installation component (e.g. 1).

## Revendications

1. Installation de radiodiagnostic comportant une pluralité de composants (1 à 7) ainsi qu'une ligne (15 à 21) pour la transmission d'informations entre les différents composants (1 à 7) de l'installation, caractérisée en ce qu'un module respectif de commande d'interface (8 à 14) muni d'une entrée et d'une sortie de données (21a, 15a) est associé à chaque composant (1 à 7) de l'installation, que tous les modules de commande d'interfaces (8 à 14) sont interconnectés au moyen de guides d'ondes optiques (15 à 21), par l'intermédiaire de leurs entrées et de leurs sorties de données (21a, 15a) pour former une boucle et qu'il est prévu un commutateur optique (22) pour les modules de commande d'interfaces (8 à 14), à l'aide duquel le flux de lumière peut être envoyé au choix par l'intermédiaire du module respectif de commande d'interface (par exemple 8) ou d'un guide d'ondes lumineuses (23) parallèle à ce module et shuntant le module de commande d'interface (par exemple 8).

2. Installation de radiodiagnostic selon la revendication 1, caractérisée en ce que le commutateur optique (22) peut être commandé en fonction de perturbations des composants associés (par exemple 1) de l'installation.

FIG 1

FIG 2